# EUROPEAN PATENT APPLICATION

(11) **EP 1 099 937 A1**
(43) Date of publication of application: **16.05.2001**
(21) Application number: 00309696.3
(22) Date of filing: 02.11.2000
(51) Int. Cl.: G01D 5/347

(54) **Scale reading apparatus**

(30) Priority: 11.11.1999 GB 9926572
(71) Applicant: RENISHAW plc, Wotton-Under-Edge Gloucestershire GL12 8JR (GB)
(72) Inventor: Henshaw, James Reynolds, Stroud, Gloucestershire GL5 4BB (GB); Stickland, Thomas John, Quedgeley, Gloucestershire GL2 4PN (GB)
(74) Representative: Jackson, John Timothy

(57) **Abstract**

A method of fixing a scale (1) onto the surface of a rotary ring (12) of a rotary encoder and adjusting the scale ends until they are in phase. The phasing of the scale ends may be checked by using a readhead. The jig comprises a support block (13) which has a central portion with supports (14) to hold the rotary ring and two side arms (19) connected to the central portion via flexural springs (18), each side arm having gripping means (5) mounted thereon to grip the ends of the scale. A spring (20) biases the side arms together whilst an adjustment screw (21) allows the gap between the scale ends to be adjusted until they are in phase.

## Description

The present invention relates to scale reading apparatus.

A known form of opto-electronic scale reading apparatus for measuring relative displacement of two members comprises a scale on one of the members, having scale marks defining a periodic pattern, a readhead provided on the other member, means for illuminating the scale, periodic diffraction means for interacting with light from the scale marks to produce interference fringes having movement relative to the readhead and detecting means in the readhead responsive to the fringes to produce a measure of the displacement.

An example of such apparatus is disclosed in EP-A-0 207 121 and also US-A-4,974,962, each of which shows the means for illuminating and the periodic diffraction means in the readhead. US-A-4,926,566 discloses a method of producing a scale, in the form of a flexible tape produced by rolling, the pitch of the scale marks being 20µm or 40µm for example. The illuminating means, the diffraction means and the detecting means responsive to the fringes may be integrated in the readhead in the manner described in US-A-5,302,820.

The above forms of apparatus basically measure linear displacement. However, for measuring rotary displacement, such a scale may be held around a cylindrical surface which rotates in use with a shaft or other rotary part relative to a readhead - see DE-A-197 51 019 for example. Such apparatus is typically called a rotary or angle or shaft encoder for example.

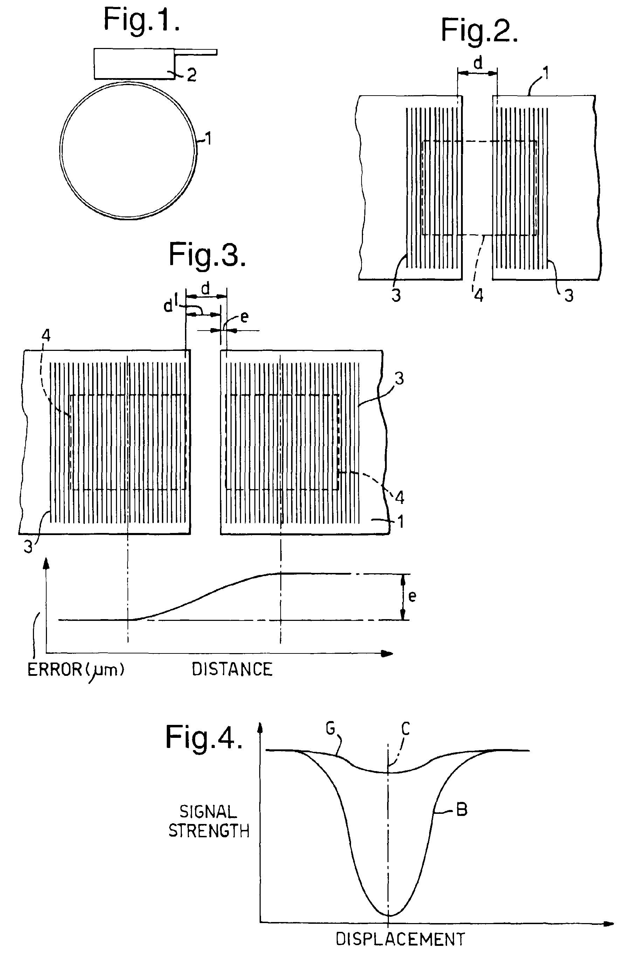

Referring to Figure 1, there is shown schematically a loop of scale 1 having scale marks defining a periodic pattern, the loop of scale being fixed for example by adhesive to the outer circumferential surface of a rotary ring (not shown in Figure 1), reference numeral 2 designating a readhead in which are means for illuminating the scale marks, periodic diffraction means for interacting with light from the scale marks to produce interference fringes having movement relative to the readhead and detecting means in the readhead responsive to the fringes to produce a measure of the rotary displacement of the shaft or other rotary part to which the ring is attached in use.

In a typical rotary encoder of the above kind, the readhead 2 can successfully read over the gap where the opposite ends of the scale 1 meet because the optical system of the readhead views an area of scale approximately 2mm square for example whilst the gap is typically much smaller than this (less than 100µm for example) - see Figure 2, in which reference numerals 3 designate scale marks in the form of lines and reference numeral 4 designates the readhead's 2mm square viewing area. If the gap between the opposite ends of the scale 1 appears to the readhead 2 as simply missing lines, then there will be a slight drop in signal strength (due to the missing lines) but not enough to prevent the readhead from operating. However, if the two ends are substantially out of phase (that is the distance (d) from the last scale mark on one side of the gap to the first scale mark on the opposite side of the gap is not an integral multiple of the scale pitch), then there will be a signal drop over the gap caused by the signal due to one side cancelling the signal due to the other within the readhead sensor. This can prevent acceptable operation of the readhead.

A measurement error results from poor phasing. In this case, the distance (d) from the last scale mark on one side of the gap to the first scale mark on the opposite side of the gap is not an integral multiple of the scale pitch, but differs from the nearest integral multiple (d') by some distance (e). In travelling from a point at which the readhead is reading entirely one end of the scale to a point at which it is reading entirely the other end the distance reported by the readhead will differ from the true distance by the value (e) (ignoring all other errors). This error step will be smoothed over a distance of approximately 2mm because of the way the readhead averages over its 2mm square viewing area - see Figure 3.

According to the present invention from one aspect, there is provided a method of fixing scale on to a surface of a member for use in scale reading apparatus, the scale having scale marks defining a periodic pattern and readable by a readhead of such apparatus, the method comprising placing the scale on to the surface so that ends of such scale are adjacent and adjusting the positions of the ends until the scale marks at adjacent scale ends are substantially in phase.

The scale could be two adjacent lengths of such scale, for example in a linear configuration.

Alternatively, the method could be for fixing a length of such scale on to a circumferential surface of a rotary member for use in scale reading apparatus, the method comprising placing the length of scale on to the circumferential surface so that its opposite ends meet and adjusting the positions of the opposite ends of the length of scale until the ends are substantially in phase.

The rotary member could be a rotary ring. In this case, the circumferential surface could be an outer circumferential surface of the ring.

The rotary member and the length of scale could be for use in opto-electronic scale reading apparatus in which diffraction means interacts with light from the scale marks.

According to the present invention from another aspect, there is provided a jig for use in fixing scale on to a surface of a member for use in scale reading apparatus, the jig comprising means for holding such a member, first and second scale end gripping means and means for moving the first and second gripping means relative to each other.

The jig could be for use in fixing a length of scale on to a circumferential surface of a rotary member for use in scale reading apparatus, the holding means being adapted for holding such a rotary member and the first and second scale end gripping means being adapted for gripping opposite ends of the length of scale.

Each of the gripping means could have a relatively sharp portion for gripping by engaging a respective scale end.

The present invention will now be described, by way of example, with reference to the accompanying drawings, in which:-
Figure 1 shows schematically a typical rotary encoder;
Figure 2 shows a typical readhead viewing area over the gap between two ends of a scale;
Figure 3 is used for explaining how phasing error can occur;
Figure 4 is a graph illustrating good and bad phasing;
Figure 5a) is a view of part of a jig according to an example of the invention;
Figure 5b) shows a part of a gripping pin of the jig;
Figure 6a) is a view of the jig receiving a ring for a rotary encoder;
Figures 6b), 6d) and 6e) are views of parts of the jig, Figure 6c) showing how parts of the jig move; and
Figures 7a) and 7b) show examples of how a readhead can be used to run over the gap between scale ends.

In the following examples of the invention, a phase adjustment jig allows the two ends of scale to be held in position and moved relative to each other until good phasing has been obtained. The jig then holds the scale in position whilst the scale is fixed into position by, for example, a curing adhesive.

The quality of the phasing can be checked by running a readhead over the gap and observing the signal strength - see Figure 4 which is a graph of signal strength against displacement relative to the gap centre C, B being a curve resulting from bad phasing and G being a curve resulting from good phasing. For a 20µm pitch scale it is desirable to set the phasing error below ±2pm (10% of pitch). At this level, the phasing error is not discernible on an error plot.

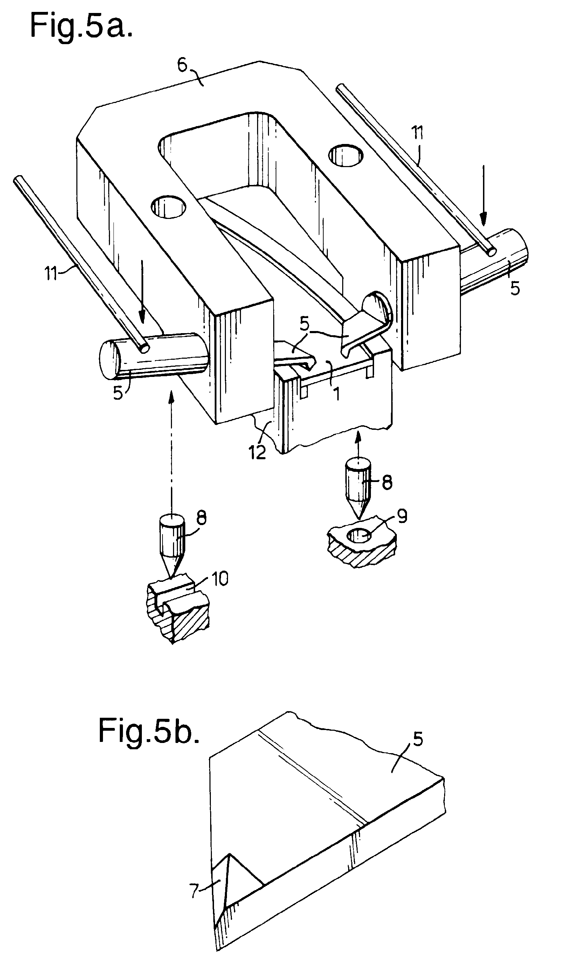

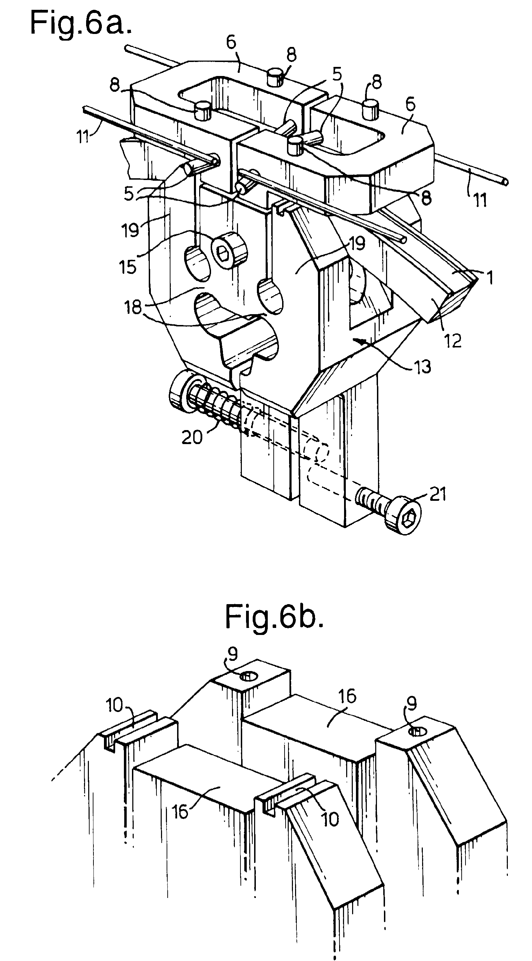

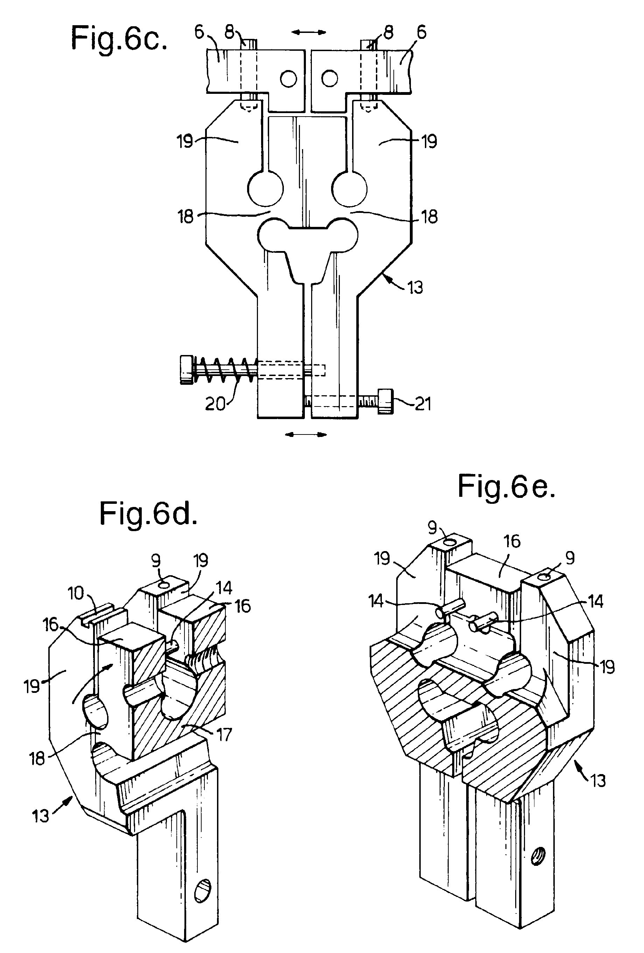

Referring to Figures 5 and 6a-6e, the jig consists of a means for holding a blank ring, two pairs of scale gripping pins and means for moving the pairs of pins relative to each other.

More particularly, each end of the scale 1 is gripped on its reading surface by a pair of pins 5, one pin each side. The pins 5 of each pair are held in a respective support block 6 so that they move together.

Each of pins 5 has a hardened point 7 on its underside which digs into the surface of the scale. The point can consist of a triangular pyramid formed by filing away a section of metal left on the pin for that purpose. By applying a downwards force on each pair of pins 5, they can be used to drag the associated scale end in either direction.

Each pin support block 6 rides on two pointed screws 8 that provide kinematic seating into a hole 9 and a slot 10 respectively. Each support block 6 is pushed down into its seating 9, 10 by a pair of springs 11 which also push the pins 5 down into the scale surface. The use of the pointed screws in the holes 9 and slots 10 provides a simple means of mounting that substantially removes any play from the system.

A ring 12 for a rotary encoder and carrying scale 1 is placed in a main adjustment block 13 of the jig and sits on two dowels 14. The ring 12 is then gripped by tightening a screw 15 which closes gripping jaws 16 of the block 13, which jaws rotate about a flexural hinge 17. The support blocks 6 are then placed on to their seatings 9,10 which are arranged on the top of the adjustment block 13, springs 11 holding the support blocks 6 in position.

The support block 13 has two flexural hinges 18 which allow side arms 19 of block 13 to flex relative to the central portion of the block 13. A spring 20 pushes the arms 19 together at the base. An adjustment screw 21 counteracts the spring 20 and allows the relative positions of the arms 19 to be varied. Turning the screw 21 in a clockwise direction drags the opposite ends of scale 1 closer together, at first pulling the scale tight and then tensioning the scale. Turning the screw 21 in the opposite direction opens the scale gap. Thus the scale gap can be controlled by turning the adjustment screw 21 before the scale 1 is fixed to the ring 12.

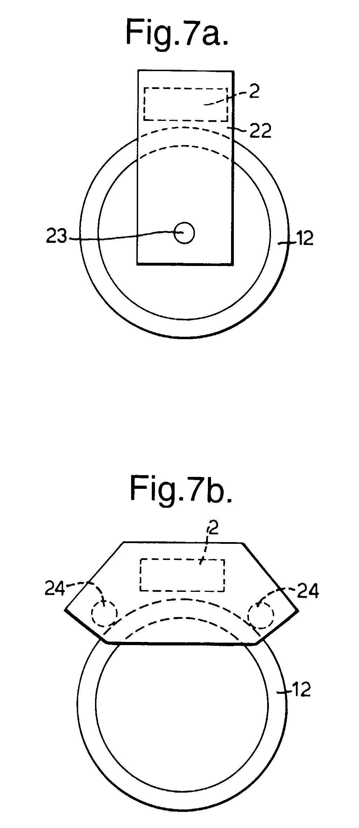

The phasing at the gap is checked by monitoring the signal strength over the gap relative to the signal strength on each side. A single readhead 2 is passed over the gap, either running on an arm 22 about a central pivot 23 (Figure 7a)) or on a set of rollers 24 (Figure 7b)) that run on the outer edge of the ring 12. The adjustment screw 21 is turned until the signal drop over the gap is as small as possible. The phasing can be checked under a microscope before fixing of scale 1 to the ring 12 (for example before curing of an adhesive commences).

## Claims

1. A jig for use in fixing a scale (1) onto a surface of a member (12) for use in a scale reading apparatus, characterised in that the jig comprises means for holding such a member (13), first and second scale end gripping means (5) and means for moving the first and second gripping means relative to each other (21).

2. A jig according to claim 1, wherein the member comprises a circumferential surface of a rotary member (12), the holding means being adapted for holding such a rotary member (12) and the first and second scale end gripping means being adapted for gripping opposite ends of the scale.

3. A jig according to any preceding claim, wherein each of the gripping means (5) has a relatively sharp portion for gripping to engage a respective scale end.

4. A jig according to any preceding claim wherein the first and second scale end gripping means (5) are supported on first and second support blocks (6), each support block having locating members (8) which sit in a kinematic seating (9,10) in the holding means and biasing means (11) to push the support blocks into the seatings and the gripping means onto the surface of the scale.

5. A jig according to any of claims 2 to 4, wherein the holding means (13) comprises a central portion with support means (14) to support the member (12), two side arms (19) joined to the central portion by two flexural hinges (18), the first and second gripping means (5) being mounted onto the first and second side arms; a spring (20) to bias the side arms together; and an adjustment screw (21) which counteracts the spring, such that the gap between scale ends is adjusted by turning the adjustment screw.
